# EUROPÄISCHE PATENTSCHRIFT

(11) **EP 0 718 320 B1**
(45) Veröffentlichungstag und Bekanntmachung des Hinweises auf die Patenterteilung: **05.07.2000**
(21) Anmeldenummer: 95119542.9
(22) Anmeldetag: 12.12.1995
(51) Int. Cl.: C08F 20/14, C08F 2/14

(54) **Verfahren zur Herstellung von Kunststoff-Teilchen**
Process for the preparation of plastic particles
Procédé pour la préparation des particules plastiques

(30) Priorität: 23.12.1994 DE 4446365
(43) Veröffentlichungstag der Anmeldung: 26.06.1996
(73) Patentinhaber: Röhm GmbH, 64293 Darmstadt (DE)
(72) Erfinder: Parusel, Markus, D-64409 Messel (DE); Siol, Werner, Dr., D-64297 Darmstadt (DE); Vetter, Heinz, Dr. Ing., D-64380 Rossdorf (DE)

(56) Entgegenhaltungen:
- DE-A- 4 327 464
- DE-C2- 2 737 112
- US-A- 4 694 035
- US-A- 4 885 350
- Chem. abstr., Band 104, Nr. 26, 30. Juni 1986 (Columbus, OH, USA), Seite 14, Spalte 1, Zusammen- fassungs-Nr. 225413c, OGAWARA, M. et al. "Non- aqueous polymer dispersions. Ricoh Co., Ltd., XP002900292

## Beschreibung

### Gebiet der Erfindung

Die Erfindung betrifft ein Verfahren zur Herstellung von definierten Kunststoffteilchen auf Poly(meth)acrylatbasis, insbesondere formstabilen Kunststoffteilchen im Teilchengrößenbereich 1 - 15 µm.

### Stand der Technik

Die Praxis verzeichnet einen steigenden Bedarf an Kunststoffen in Form von formstabilen Kunststoffteilchen mit einer definierten, einheitlichen Teilchengröße. Dabei kommt dem Teilchengrößenbereich 1 - 50 µm und speziell dem noch engeren Bereich 1 - 15 µm besonderes Interesse zu.

Teilchen dieses Typs finden mannigfaltige Anwendung z.B. als Abstandhalter in Displays, Folien etc., als Oberflächenmodifizierungsmittel, als Trägermaterial in der Diagnostik usw.
Das Hauptinteresse liegt indessen im Bereich der optischen Industrie, die gerade mit Teilchen in diesem Größenbereich bei exakt einstellbarem Brechungsunterschied zu einer gegebenen Polymermatrix die unterschiedlichen Lichteffekte realisieren kann.

Der Stand der Technik, die Herstellung von Polymethacrylat (PMMA)-Teilchen betreffend ist sehr umfangreich.

Eine ganze Reihe von Arbeiten betreffen die Herstellung von Polymethacrylat-Dispersionen in organischen Medien, so werden gemäß Jpn. Kokai Tokkyo Koho 8179,111 (= Chemical Abstracts: 95: 188086w) vernetzte Teilchen aus Polyalkyl(meth)acrylaten mit 6 - 20 C-Atomen im Alkylrest oder Polyvinylester von Fettsäuren mit 7 - 21 C-Atomen mit einem Durchmesser von 5 - 8 um hergestellt nach dem Zulaufverfahren in Isopar G (aliphat. petroleum oil).
Daneben werden eine ganze Reihe von sehr feinteiligen, stabilen Acrylatdispersionen in organische Medien, z.B. für Beschichtungszwecke beschrieben, so z.B. JP 62,220,564 = Chemical Abstracts 108: 133526w. JP 61,181,856 = Chemical Abstracts 106: 34795k beschreibt eine äußerst feinteilige Dispersion, die > 6 Monate stabil ist ohne Sedimentation.
Einen guten Überblick über die Dispersionspolymerisation von Methylmethacrylat in nicht-wäßrigen Medien bietet der Artikel von M.A. Winnik et al., in Makromol. Chem. Macromol. Symp. 10/11, 483 - 501 (1987).
Winnik et al. beschreiben z.B. den Einfluß der Lösungsmittelgüte des organosolen Mediums auf die Polymerisationsgeschwindigkeit des MMA oder den Einfluß der Lösungsmittelgüte auf die Teilchengröße.
Im allgemeinen werden niedrig siedende Kohlenwasserstoffe wie Cyclohexan, Heptan bis hin zu Dodecan beschrieben. Als Emulgatoren kommen die verschiedensten Blockcopolymersysteme zur Anwendung.

### Aufgabe und Lösung

Das Anfordernungsprofil an Polymerteilchen der genannten Art mit einem Durchmesser von ca. 1 - 15 µm ist seit langem bekannt; es fehlte jedoch an einem günstigen, technisch praktikablen Herstellungsverfahren.
In der (unveröffentlichten) deutschen Patentameldung P 43 27 464.1 wird die Herstellung formstabiler Polymethylmethacrylat-Teilchen in Cyclohexan als Lösungs-/Fällungsmittel beschrieben. Bei diesem Verfahren werden sehr gleichmäßige Teilchen mit einem Durchmesser von 2 - 10 µm erhalten. Dabei sollten nach bisher vorliegenden Erkenntnissen eine ganze Reihe von Randbedingungen exakt eingehalten werden.
Die Lehre der genannten Patentanmeldung schreibt ferner die Verwendung von Percarbonaten als Initiatoren vor.
Es bestand somit nach wie vor ein Interesse daran, von den verschiedenen Limitierungen der genannten Verfahren wegzukommen. Dabei durften jedoch keine Einschränkungen bei der Produktqualität hingenommen werden.
Das Verfahren der vorliegenden Erfindung eröffnet diese Möglichkeit in hervorragender Weise.
Die vorliegende Erfindung betrifft somit ein Verfahren zur Herstellung von Poly(meth)acrylat-Teilchen mit einem Durchmesser von 1 - 15 µm, wobei man die Monomeren M nach dem Verfahren der Batchpolymerisation mit 20 - 50 Gew.-Teilen Monomer in einem flüssigen Medium LM, bestehend aus 55 - 100 Gew.-% Mineralöl und unter Zusatz von 0,1 - 5 Gew.-Teilen eines Polymer-Emulgators E und 0,05 - 5 Gew.-Teilen eines radikalischen Initiators, polymerisiert.
Vorzugsweise wird die Polymerisation mit einer solchen Geschwindigkeit durchgeführt, daß der Anstieg des Monomerumsatzes von 0 auf > 80 %, besonders bevorzugt der Anstieg des Monomerumsatzes von 1 auf > 90 % in einem Zeitraum von 15 - 60 Minuten erfolgt.

Erfindungsgemäß anwendbare Monomere M werden - zweckmäßig unter Berücksichtigung von im weiteren angegebenen Auswahl-Kriterien - ausgewählt aus der Gruppe der Formel I 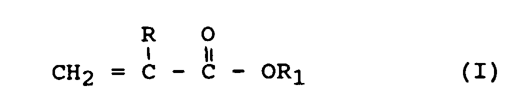 worin R für Wasserstoff oder Methyl
und R₁ für einen Alkylrest mit 1 bis 8 Kohlenstoffatomen oder einen gegebenenfalls mit C₁-C₈-Alkyl-substituierten Arylrest mit C₆-C₁₄-, insbesonder C₆-C₁₀-Kohlenstoffatomen insbesondere einen Phenyl-, Naphtyl- oder einen Aralkylrest, vorzugsweise einen Benzylrest oder Phenethylrest steht, wobei im allgemeinen mindestens 20 Gew.-%, insbesondere 30 Gew.-% und besonders bevorzugt 70 Gew.-% und bis zu 100 Gew.-% der Monomeren M aus Methylmethacrylat besteht.
Vorzugsweise steht R in der Formel I für Methyl, d.h. Methacrylsäureester sind bevorzugt.
Genannt sei als aliphatischer Ester z.B. Isobutylmethacrylat, sodann Methylacrylat, Ethyl(meth)acrylat, Butyl(meth)acrylat, 2-Ethylhexyl(meth)acrylat.
Vorzugsweise handelt es sich bei den eingesetzten Monomeren um Monomermischungen, d.h. bevorzugt sind die 1 - 15 µm großen Teilchen des Verfahrens aus Copolymeren aufgebaut.
Bevorzugt sind Monomermischungen, die neben den Methacrylsäureestern als Hauptbestandteil geringe Anteile, z.B. 0,5 - 10 Gew.-% aus Acrylsäureestern aufweisen.
Wie im folgenden gezeigt wird, lassen sich insbesondere durch die Zusammensetzung der Monomermischung die erzielbare Polymerisationsgeschwindigkeit und die Teilchengröße einstellen.

Die Aryl- bzw. Aralkyl(meth)acrylate mit 6 bis 14-Kohlenstoffatomen im Esterteil dienen u.a. zur Erhöhung bzw. Angleichung des Brechungsindexes, wobei Anteile von 1 - 80 Gew.-%, vorzugsweise 1 - 50 Gew.-% an den Monomeren M, vorteilhaft sein können. Genannt seien beispielsweise Phenyl-, Tolyl-, Naphthyl-, Phenethyl und insbesondere Benzyl(meth)acrylate.
Ein Anteil an Vinylaromaten wie Styrol und seinen Homologen an den Monomeren M ist möglich, soll jedoch auf Mengen von 0 bis < 20 Gew.-% beschränkt bleiben, da diese Monomeren den Polymerisationsverlauf stören.
Die Erfindung hat gezeigt, daß sich durch die Mitverwendung hydrophiler Monomerer die Teilchengröße in Richtung Teilchenverkleinerung steuern läßt. Als derartige hydrophile Monomeren kommen z.B. (Meth)acrylsäurehydroxy- bzw. ggfls. alkylsubstituierte Aminoalkylester der (Meth)acrylsäure mit C₁ - bis C₁₂-Alkylresten sowie entsprechende Amide oder beispielsweise (Meth)acrylsäure, infrage. Hydrophobe Comonomere, wie z.B. die oben genannten Isobutylmethacrylate, Phenylmethacrylate, Benzylmethacrylate, Butylacrylate, die in Mengen von 0 bis ca. 70 Gew.-% bezogen auf die Monomeren M vorhanden sein können, steuern die Teilchengröße in Richtung Teilchenvergrößerung.
Desweiteren können die Teilchen durch Mitverwendung von Vernetzern, insbesondere Pfropfvernetzern, d.h. Monomeren mit zwei radikalisch polymerisierbaren Gruppen verschiedener Reaktivität, wie z.B. Allyl(meth)acrylat, in Anteilen von 0,1 bis 20 Gew.-Teilen bezogen auf die Monomeren M vernetzt werden. Die Verwendung von vernetzenden Monomeren mit gleichartigen polymerisationsfähigen Einheiten, z.B. (Meth)acrylsäureester von mehrwertigen Alkoholen ist dagegen auf < 1 Gew.-Teil bezogen auf die Monomeren zu beschränken. Ganz allgemein sind Teilchen mit einem Anteil von 0,1 - 20 Gew.-% an vernetzenden Monomeren bevorzugt, da diese Vernetzer die Formstabilität der Teilchen in den verschiedenen Anwendungen gewährleisten. Über die Menge des Vernetzers lassen sich auch die Oberflächeneigenschaften der Teilchen steuern. So sind für einige Anwendungen Teilchen mit einer nicht glatten, rauhen Oberfläche besonders bevorzugt.
Die erfindungsgemäß in Mengen von 0,1 - 5 Gew.-Teilen einzusetzenden Polymer-Emulgatoren E bestehen in der Regel aus Blockpolymeren, vorzugsweise aus Styrol-Olefin-Blockcopolymeren BCP (vgl. Houben-Weyl, Methoden der organischen Chemie Bd. E20/II, 987 - 993, G. Thieme-Verlag 1987). Sie sind vorzugsweise ausgewählt aus der Gruppe, aufgebaut aus einem Polystyrol- und einem Ethylen-co-propylen-Block (= hydriertes Polyisopren) oder aus einem Polystyrol und einem Ethylen-co-butylen-Block (= hydriertes Polybutadien) oder direkt aus Polystyrol-Polyisopren- bzw. Polystyrol-Butadien-Blockcopolymeren. Der Anteil der Polystyrolblöcke zu dem anderen Blockcopolymeranteil in BCP liegt in der Regel bei 20 bis 80 Gew.-%, vorzugsweise 30 - 50 Gew.-%.
Die Blockcopolymeren BCP besitzen im allgemeinen ein Molekulargewicht im Bereich M_{w} = 24 000 - 200 000, bevorzugt 50 000 - 130 000 (Bestimmung der Molekulargewichte nach H.F. Mark et al., Encyclopedia of Polymer Science & Technology, Vol. 10, pg. 1 - 16, J. Wiley 1978).
Genannt seien beispielsweise Blockcopolymerisate vom Typ SHELLVIS ® 50 der Fa. Shell oder K-Resin-Typen von Philips-Petroleum, z.B. K-Resin KR05.
Hinsichtlich der Wahl des Polymerisations-Initiators sind bislang keine kritischen Einschränkungen zu erkennen, d.h. es können die für die radikalische MMA-Polymerisation üblichen Initiatoren wie Azo- oder Peroxidische Initiatoren in den üblichen Mengen, i.a. im Bereich 0,05 bis 3 Gew.-% bezogen auf die Monomeren zur Anwendung kommen (vgl. H. Rauch-Puntigam, Th. Völker, Acryl- und Methacrylverbindungen, Springer-Verlag 1967). Bevorzugt sind jedoch Peroxiverbindungen wie z.B. Perester oder Percarbonate.
Definitionsgemäß besteht das flüssige Medium LM, in dem die Batchpolymerisation stattfindet, zu 55 - 100 Gew.-% aus Mineralöl, vorzugsweise einem Gasöl mit einem Siedebereich von 225 - 350 Grad C (vgl. DIN 51567).
Genannt seien z.B. die Handelsprodukte SHELL RISELLA ÖL G07. Sofern die Teilchen z.B. in lebensmittelnahe Anwendungen gehen, wird man aromatenfreie Mineralöle wählen, wie z.B. EXXOL D 100S. Wie im weiteren näher erläutert werden wird, bedingt die Auswahl der Monomeren in Abhängigkeit von deren (lösungsmittelabhängiger) Polymerisationsgeschwindigkeit gegebenenfalls eine Anpassung der Lösungseigenschaften des flüssigen Mediums LM durch Zusatz weiterer Lösungsmittelkomponenten mit gutem Lösungsvermögen für die Polymeren.
Dazu sind zu rechnen: Alkylbenzole wie z.B. Toluol, sauerstoffhaltige Lösungsmittel, wie z.B. Carbonsäureester wie Butylacetat. Das erfindungsgemäße Verfahren bedient sich mit Vorteil bestimmter, aus der Erfahrung hervorgegangener, Kriterien, die Wahl der Edukte und Parameter betreffend.

### Durchführung der Erfindung

Die Einhaltung des Kriteriums für die Polymerisationsgeschwindigkeit, definiert als 1 - 80 % Umsatz innerhalb von 15 - 60 Minuten, ist dabei von besonderer Bedeutung.
Die Erfahrung lehrt, daß bei einer Polymerisationszeit < 12 Minuten nur sehr feinteilige Partikel anfallen, die außerhalb des beanspruchten Bereichs liegen. Bei einer Polymerisationszeit > 60 Minuten sind die Teilchen dagegen zu groß und uneinheitlich oder es entstehen keine Teilchen mehr, sondern nur Lösungspolymerisate. Die erfindungsgemäß gewonnenen Poly(meth)acrylat-Partikel liegen in der Regel völlig im Teilchengrößenbereich von 1 - 15 µm (wobei als Maß der Teilchengröße der Durchmesser in der Ebene der größten Erstreckung dienen soll). Die Bestimmung geschieht lichtmikroskopisch.
Die Verfahrensprodukte weisen im Gegensatz zu klassischen Perlpolymerisaten eine recht einheitliche Teilchengrößenverteilung auf. Im Zusammenhang der vorliegenden Erfindung werden sie daher als **monodispers** bezeichnet.
Darunter sei zu verstehen, daß die Teilchen zu mindestens 80 Gew.-%, vorzugsweise 90 Gew.-% der Teilchen innerhalb eines Größenbereichs von ± 20 % vom angegebenen Mittelwert liegen. Gelegentlich können auch geringere Anteile (< 10 Gew.-%) feiner Teilchen gebildet werden, die jedoch anwendungstechnisch völlig ohne Belang sind.

Die vorliegende Erfindung bedient sich insbesondere der Erkenntnis, daß die Polymerisierbarkeit, die das für die Herstellung wichtigste Kriterium darstellt, im wesentlichen durch **zwei** Maßnahmen in den erfindungsgemäßen Bereich gelenkt werden kann, nämlich
- die Lösungsmittelgüte und
- die chemische Zusammensetzung der Teilchen.

So polymerisiert z.B. reines Methylmethacrylat (MMA) in einem Mineralöl (z.B. Shell Risella Gasöl) innerhalb weniger Minuten, wenn nicht im Sekundenbereich zu Teilchen ≤ 1 µm. Durch Zusatz von guten Lösungsmitteln für das Polymere, wie z.B. Alkylbenzolen wie Toluol oder bevorzugt durch Zusatz sauerstoffhaltiger Lösungsmittel wie z.B. Butylacetat läßt sich die Polymerisation so verlangsamen, daß der Anstieg des Umatzes von 1 auf > 80 % in einem Zeitraum von 12 - 60 Minuten, besonders bevorzugt in einem Zeitraum von 15 - 50 Minuten für einen Anstieg des Umsatzes von 1 auf > 90 Gew.-%. liegt. Die weitere Möglichkeit, die Polymerisationszeit zum Erreichen des Umsatzes von 1 - 80 % in den Bereich von 12 - 60 Minuten zu legen, besteht in der Erhöhung der Hydrophobie der Teilchen, in erster Näherung gleichbedeutend mit Erhöhung der C-Zahl und der Verzweigung bzw. Einbau aromatischer Gruppen in R₁ bzw. gegebenenfalls vorhandener anderer Comonomerer. Der Anteil an Methacrylsäureestern außer MMA- an den Monomeren M liegt üblicherweise bei 0 - 80 Gew.-% So kann beispielsweise beim Übergang einer reinen MMA Polymerisation zu einer Copolymerisation mit Benzylmethacrylat (z.B. 40 Gew.-%) die Polymerisation im gewünschten Sinne verlangsamt werden. Den gleichen Effekt erreicht man durch Copolymerisation mit z.B. Isobutylmethacrylat.
Erfindungsgemäß besteht somit die Möglichkeit mittels des Verfahrens nahezu beliebige Polymethacrylate mit einem Durchmesser von 1 - 15 µm durch Copolymerisation des Methylmethacrylats mit beliebigen copolymerisierbaren Monomeren in einem Medium wie dem Carbonsäureester-Mineralölgemisch herzustellen. Durch zweckmäßige Wahl der Comonomeren lassen sich die interessierenden Kerngrößen der Polymeren, wie Brechungsindex, Vernetzungsgrad usw. einstellen.

Die Polymerisation kann in einem für die Fällungspolymerisation geeigneten Reaktor, bei kleineren Ansätzen beispielsweise einem 500 ml Dreihalskolben, ausgestattet mit Kühler, Schutzgaseinleitungsvorrichtung, Thermometer und Rührer, durchgeführt werden. Zweckmäßig wird unter einem Schutzgas wie z.B. Argon gearbeitet. Vorteilhafterweise gibt man in dem Reaktor das Mineralöl bzw. das Gemisch mit anderen Lösungsmitteln, das bzw. die Monomeren, insbesondere der Formel I und den Emulgator als Lösung vor. Als Anhalt seien beispielsweise 150 Gew.-Teile flüssiges Medium, berechnet auf die Monomeren, genannt.
Anschließend erwärmt man beispielsweise auf 50 - 80 Grad C. Wenn die gewählte Innentemperatur erreicht ist, startet man unter Rühren die Polymerisation durch Zugabe des Initiators. Als Initiatoren kommen - wie bereits ausgeführt - Azo- und insbesondere Perverbindungen, z.B. Peroxyester, wie die Peroxycarbonate, infrage.
Beispielhaft genannt sei das Bis-(4-tert.Butylcyclohexyl)peroxydicarbonat, daneben das Dicyclohexylperoxydicarbonat (unter dem Warenzeichen INTEROX BCHPC bzw. INTEROX CHPC 1652 der Fa. Peroxidchemie erhältlich) oder tert.Butylperneodecanoat (vgl. Brandrup-Immergut, Polymer Handbook, 3rd. Ed. III-1, J. Wiley 1989).

Gewöhnlich steigt nach Initiatorzugabe die Temperatur bereits nach kurzer Zeit, beispielsweise nach einer Minute, wobei sich die bis anhin klare Lösung trübt. Nach ca. 5 Minuten erscheint der Ansatz in der Regel bereits weiß. Als typische Fällungspolymerisation verläuft die Polymerisation recht schnell, so daß auf eine gute Kühlung und Rührung geachtet werden muß. Zur Nachreaktion hält man noch über eine gewisse Zeit, beispielsweise ca. 1/2 - 2 Stunden, unter Rühren bei erhöhter Temperatur, z.B. ca. 80 Grad C und läßt dann unter Rühren auf Raumtemperatur abkühlen.
Die so erhaltenen Dispersionen sind nahezu völlig koagulatfrei. Die Isolierung der Teilchen erfolgt durch die üblichen Fest-Flüssigtrennmethoden, beispielsweise durch Filtration mit einem Drehtellerfilter oder durch Zentrifugation, z.B. mit einem Decanter. Für viele Anwendungen genügt auch eine einfache Sedimentation der Teilchen. Diese Abtrennung der Teilchen durch Sedimentation und anschließendes Waschen ist besonders bei Teilchen mit einem Durchmesser von 4 - 15 µm sehr einfach durchzuführen. Für viele Anwendungen kann durchaus ein Rest des Mineralöls in den Teilchen verbleiben. Sofern erforderlich, kann man die Teilchen auch mit Nicht-Lösungsmittel waschen, beispielsweise um Reste des Emulgators oder andere Verunreinigungen zu entfernen. Als Waschflüssigkeiten bieten sich beispielsweise Kohlenwasserstoffe wie Cyclohexan oder Alkohole wie Isopropanol an. Man erhält monodisperse Polymerisatpartikel im angegebenen Größenbereich (Durchmesser 1 - 15 µm).

Neben reinen Polymethacrylat-Teilchen und unvernetzten Copolymer-Teilchen können mit diesen Verfahren bevorzugt vernetzte Teilchen erzeugt werden, wobei, wie oben ausgeführt, Allylmethacrylat als Vernetzer bevorzugt ist.

Von Interesse sind z.B. vernetzte, homogene Teilchen aus 90 bis 99,5 Gew.-% Methacrylsäureester und 10 - 0,5 Gew.-% Allylmethacrylat in einem Teilchengrößenbereich von 4,0-10,0 µm.
Bevorzugt sind auch vernetzte Teilchen, aufgebaut aus 0,5 - 10 Gew.-% Allylmethacrylat, 10 - 50 Gew.-% gegebenenfalls substituiertem Phenylalkylmethacrylat, z.B. Benzylmethacrylat, Phenylmethacrylat und 40 - 89,5 Gew.-% Methylmethacrylat sowie 0 - 20 Gew.-% weitere (Meth)acrylsäureester.

Ganz besonderes Interesse gilt vernetzten Teilchen der Zusammensetzung:
30 - 80 Gew.-% Methylmethacrylat
60 - 19,5 Gew.-% Benzylmethacrylat und
10 - 0,5 Gew.-% Allylmethacrylat
mit einer Teilchengröße von 2 - 12 um.

Generell lassen sich mit dem Verfahren der Erfindung besonders gut Teilchen mit einem Brechungsindex n_{D} im Bereich 1,48 -1,58 im Größenbereich 1 - 15 µm, insbesondere 2 - 7,5 µm, herstellen.
Derartige Teilchen lassen sich besonders gut in Anteilen von 0,01 - 60 Gew.-%, bevorzugt in Anteilen von 0,5 - 25 Gew.-% in Formmassen einarbeiten.
Dabei kommen alle thermoplastisch verarbeitbaren Formmassen infrage, z.B. PVC, Polyolefine, Polyester, Polystyrol, Polyamide, insbesondere jedoch amorphe, glasklare, gegebenenfalls auch eingefärbte thermoplastische Formmassen des Typs Polymethacrylat, Polymethacrylat-Styrol-Copolymere, Polymethacrylat-Styrol-Maleinsäureanhydrid-Copolymere, Polymethacrylimide, Polycarbonate (hier insbesondere Bisphenol-A-Polycarbonat) sowie Polystyrol und PVC. Von besonderem Interesse sind die Formmassen auf Basis PMMA und Polycarbonat.
Die Formmassen können als solche oder auch schlagzäh modifiziert zum Einsatz kommen.
Neben dem Einsatz der erfindungsgemäßen Teilchen in Formmassen kommt auch der Einsatz der Teilchen in Gießharzen zur Anwendung. Auch die Einarbeitung der Teilchen z.B. in Anteilen von 0,01 - 30 Gew.-% in Lacke und hier insbesondere in UV-härtbare Reaktiv-Lacke ist bevorzugt.

Beim Einsatz der monodispersen Teilchen in Formmassen kommen entweder Konzentrate (Masterbatches) oder direkt Trockenmischungen zum Einsatz. Formmassen, bzw. Trockenmischungen, die diese Teilchen enthalten, können durch die bekannten thermoplastischen Verarbeitungsverfahren verarbeitet werden, so z.B. durch Extrudieren, Spritzgießen, Spritzblasen, Extrusionsblasen, Coextrudieren.
Der vorteilhafte Einsatz dieser monodispersen Perlpolymerisate dient zum einen der reinen Oberflächenveredelung von Formkörpern, insbesondere lassen sich jedoch besondere optische Effekte durch Einarbeitung dieser Teilchen in die Formmasse oder Coextrusionsmasse und Lacke erzielen.
Bevorzugt hergestellt werden mit Formmassen, die diese monodispersen Teilchen enthalten, Projektionswände, Rückprojektionswände, TV-Screens, Diaprojektionswände, (d.h. Bilderzeugung ganz allgemein), Monitorabdeckungen, Skalenabdeckungen, Leuchtenabdeckungen und auch Streulinsen.

Daneben können auch Raumtrennwände mit Formmassen, die diese Perlen enthalten, hergestellt werden. Dabei stellen die genannten Anwendungen nur einen kleinen Teil der Einsatzmöglichkeiten für Formmassen mit diesen monodispersen Teilchen mit - im bevorzugten Fall - rauher Oberfläche dar.
Die folgenden Beispiele dienen zur Erläuterung der Erfindung. Die Bestimmung der Teilchengröße geschieht mittels Lichtmikroskop.

### BEISPIELE

### Beispiel 1

### (nicht erfindungsgemäßes Beispiel)

Ein 250 ml Glasreaktor, ausgestattet mit Rührer, Thermometer, Kühler, Gaseinleitung und mit Stickstoff inertisiert, wird auf 70 Grad C erwärmt, dann werden
- 142,7 g: Shell Risella Gasöl G07 (Gemisch aus paraffinischen, naphthenischen und aromatischen Kohlenwasserstoffen, Siedebereich: 237 - 276 Grad C, Dichte: 0,857 g/cm³, Viskosität 3,0 mm²/s (DIN 51562) Flammpunkt: 106 Grad C)
- 30,02 g: Methylmethacrylat
- 24,77 g: Benzylmethacrylat
- 1,55 g: Allylmethacrylat und
- 1,16 g: Shellvis 50 (Shellvis SAP 150), Styrol-Isopren-Copolymer (Erweichungstemperatur: 110 Grad C), rel. Partikeldichte der Ballen (20 Grad C): 0,83 g/cm³, Schüttgewicht: 593 kg/m³.
eingefüllt und unter Rühren auf 70 Grad C erwärmt.
Wenn das Shellvis 50 gelöst ist, wird die Polymerisation durch Zugabe von 0,62 g Bis(4-tert.Butylcyclohexyl)peroxidicarbonat (gelöst in 5,58 g Methylmethacrylat) gestartet.
Durch diese Initiator/Monomerzugabe fällt die Innentemperatur um etwa 1 Grad C ab. Nach etwa einer Minute ist der anfangs klare Reaktorinhalt weiß. Die Temperatur steigt innerhalb von 5 Minuten auf 76 Grad C. Nach 10
Minuten erreicht die Innentemperatur mit 90,7 Grad C ihr Maximum. Die Polymerisation ist beendet. Bereits nach einer weiteren Minute, d.h. nach 11 Minuten insgesamt, fällt die Innentemperatur auf 88,6 Grad C und ist nach insgesamt 20 Minuten wieder bei 70 Grad C.

Man erhält eine koagulatfreie Dispersion mit einer Teilchengröße < 1 µm.

### Beispiel 2

Man wiederholt den Ansatz gemäß Beispiel 1, wählt jedoch als Reaktionsmedium nicht reines Mineralöl sondern eine Mischung aus
- 122,07 g: Shell Risella Gasöl G07 und
- 20,64 g: Butylacetat

Zweckmäßigerweise werden in diesem Fall im Reaktor vorgelegt:
- 122,07 g: Shell Risella Gasöl G07
- 15,06 g: Butylacetat
- 35,60 g: Methylmethacrylat
- 1,55 g: Allylmethacrylat
- 1,16 g: Shellvis 50
unter Rühren auf 70 Grad C erwärmt und durch Zugabe von 0,62 g Bis(4-tert.Butylcyclohexyl)peroxodicarbonat gelöst in 5,58 g Butylacetat die Polymerisation gestartet.

Durch die Initiator/Lösungsmittelzugabe fällt die Innentemperatur um 1 Grad C, steigt dann langsam an. Nach ca. 3 Minuten ist der Kesselinhalt weiß. Nach 19 Minuten erzielt die Innentemperatur mit 79,1 Grad C ihr Maximum und fällt dann. Die Polymerisation ist beendet. Es wird noch 20 Minuten gerührt.
Man erhält eine koagulatfreie Dispersion.
> 99 % aller Teilchen haben einen Teilchendurchmesser von 2,5 - 2,7 µm.

### Beispiel 3

Man verfährt wie in Beispiel 2, erhöht jedoch den Anteil an Butylacetat am Reaktionsmedium, das dann wie folgt zusammengesetzt ist:
- 111,75 g: Shell Risella Gasöl G07
- 30,96 g: Butylacetat

In diesem Fall wird der Reaktorinhalt nach 4 Minuten weiß, die Innentemperatur erreicht nach 26 Minuten mit 75,8 Grad C ihr Maximum, anschließend wird noch 24 Minuten weiter gerührt, wobei die Temperatur auf 70 Grad C fällt. Danach wird auf 80 Grad C erwärmt und 30 Minuten bei 80 Grad C gehalten. Dabei ist keinerlei Reaktionswärme feststellbar.
Nach dem Abkühlen auf Raumtemperatur erhält man eine koagutlatfreie Dispersion, > 99 % aller Teilchen haben einen Durchmesser von 3,5 µm.

### Beispiel 4

Man verfährt wie in Beispiel 3, wählt jedoch ein Reaktionsmedium mit nochmals erhöhtem Gehalt an Butylacetat
- 101,43 g: Shell Risella Gasöl G07
- 41,28 g: Butylacetat

Die Temperatur im Rührreaktor erreicht nach 39 Minuten das Temperaturmaximum: 73,5 Grad C. Man läßt wieder auf 70 Grad C abkühlen und erwärmt anschließend 30 Minuten auf 80 Grad C. Die erhaltene Dispersion ist koagulatfrei.
Die Teilchen haben einen Durchmesser von 6,7 - 7,1 µm. Die Teilchen haben eine rauhe Oberfläche. Neben den Teilchen von 6,7 - 7,1 µm Durchmesser (> 95 Gew.-%) sind < 5 Gew.-% feinere Teilchen entstanden.
Zur Aufarbeitung werden die Teilchen abfiltriert (Filtertuch Nybolt 1 µm), anschließend in Isopropanol dispergiert und erneut abfiltriert und danach bei 30 Grad C im Vakuum getrocknet.

Die Ergebnisse der Beispiele 1 - 4 sind noch einmal in Tab. 1 zusammengestellt.

**TABELLE 1**

| Beisp. Nr. | Butylacetat/Lösungsmittel (Gew.-%) | Reaktionszeit (min) | max. Temp. (Grad C) | Teilchendurchmesser (µm) |
|---|---|---|---|---|
| 1 | -- | 10 | 90,7 | ≤ 1 |
| 2 | 14,5 | 19 | 79,8 | 2,5 - 2,7 |
| 3 | 21,7 | 26 | 75,8 | 3,5 |
| 4 | 28,9 | 39 | 73,5 | 6,6 - 7,1* |

| | | | | |
|---|---|---|---|---|
| * = geringe Anteile feiner Teilchen | | | | |

### Beispiel 5

Herstellung von Teilchen mit K-Resin KR05 als Emulgator. Man verfährt wie in Beispiel 2.

Vorlage im Reaktionsgefäß:
- 105,95 g: Shell Risella Gasöl G07
- 24,64 g: Butylacetat
- 34,06 g: Methylmethacrylat
- 24,77 g: Benzylmethacrylat
- 3,10 g: Allylmethacrylat
- 7,70 g: einer 10 %igen Lösung von K-Resin KR05 in Butylacetat

Start der Polymerisation mit 0,62 g Bis(4-tert.Butylcyclohexyl)-peroxidicarbonat, gelöst in 5,58 g Butylacetat Temperaturmaximum nach 28 Minuten: 74,5 Grad C. Nach Kühlen auf Raumtemperatur erhält man eine koagulatfreie Dispersion. > 90 Gew.-% der Teilchen haben eine Durchmesser von 4 µm ± 0,5 µm. Es ist etwas Feinanteil vorhanden.

### Beispiel 6

Synthese von weichen, vernetzten Teilchen in einem aromatenfreien Mineralöl
- 143,10 g: Exxsol D100S
- 14,23 g: Methylmethacrylat
- 40,25 g: Butylacrylat
- 1,86 g: Allylmethacrylat
- 0,77 g: Shellvis 50
werden in den Rührreaktor gemäß Beispiel 1 auf 70 Grad C erwärmt. Anschließend mit 0,62 g Bis(4-tert.Butylcyclohexyl)-peroxidicarbonat gelöst in 5,58 g Methylmethacrylat gestartet.
Nach 5 Minuten ist der Reaktorinhalt weiß. Nach 20 Minuten wird das Temperaturmaximum erreicht. Nach insgesamt 70 Minuten Reaktionzeit wird auf 80 Grad C erwärmt und bei dieser Temperatur 30 Minuten gehalten.
Man erhält eine koagulatfreie Dispersion. Die Teilchen sind sehr einheitlich: Durchmesser 4 µm. Die Teilchen sind rund und glatt. Es ist kein Feinanteil vorhanden.

## Patentansprüche

1. Verfahren zur Herstellung von Poly(meth)acrylatteilchen mit einem Partikeldurchmesser von 1-15 um,
dadurch gekennzeichnet,
daß man die Monomeren M nach dem Verfahren der Batchpolymerisation mit 20 - 50 Gew.-Teilen Monomer M in einem flüssigen Medium LM, bestehend aus 55 - 100 Gew.-% Mineralöl und unter Zusatz von 0,1 - 5 Gew.-Teilen eines Polymer-Emulgators E und 0,05 - 5 Gew.-Teilen eines radikalischen Initiators polymerisiert.

2. Verfahren gemäß Anspruch 1, dadurch gekennzeichnet, daß der Anstieg des Monomerumsatzes von 0 auf > 80 % der Monomeren M in einem Zeitraum von 15 - 60 Minuten erfolgt.

3. Verfahren gemäß den Ansprüchen 1 bis 2, dadurch gekennzeichnet, daß die Monomeren M aus verschiedenen Comonomeren bestehen.

4. Verfahren gemäß den Ansprüchen 1 bis 3, dadurch gekennzeichnet, daß die Monomeren M zu mindestens 20 Gew.-% aus Methylmethacrylat bestehen.

5. Verfahren gemäß den Ansprüchen 1 bis 4, dadurch gekennzeichnet, daß als Comonomere M Aralkyl(meth)acrylate eingesetzt werden.

6. Verfahren gemäß den Ansprüchen 1 - 5, dadurch gekennzeichnet, daß die Monomeren M zu 0,5 - 10 Gew.-% aus Acrylsäureestern bestehen.

7. Verfahren gemäß den Ansprüchen 1 - 6, dadurch gekennzeichnet, daß die Monomeren M zu 0,1 - 20 Gew.-% aus vernetzenden Monomeren bestehen.

8. Verfahren gemäß den Ansprüchen 5 - 7, dadurch gekennzeichnet, daß als Aralkyl(meth)acrylat Benzylmethacrylat und als vernetzendes Monomer Allyl(meth)acrylat eingesetzt wird.

## Claims

1. A process for the production of poly(meth)acrylate particles with a particle diameter of 1 to 15 µm, characterised in that the monomers M are polymerised using the process of batch polymerisation with 20 to 50 parts by weight of monomer M in a fluid medium LM, comprising 55 to 100 wt.-% mineral oil, and with the addition of 0.1 to 5 parts by weight of a polymer emulsifier and 0.05 to 5 parts by weight of a radical initiator.

2. A process according to claim 1, characterised in that the increase in monomer yield from 0 to > 80% of monomer M takes place within a time period of 15 to 60 minutes.

3. A process according to claims 1 to 2, characterised in that the monomers M comprise different comonomers.

4. A process according to claims 1 to 3, characterised in that the monomers M comprise at least 20 wt.-% methyl methacrylate.

5. A process according to claims 1 to 4, characterised in that aralkyl (meth)acrylates are used as comonomers M.

6. A process according to claims 1 to 5, characterised in that the monomers M comprise 0.5 to 10 wt.-% acrylates

7. A process according to claims 1 to 6, characterised in that the monomers M comprise 0.1 to 20 wt.% crosslinking monomers.

8. A process according to claims 5 to 7, characterised in that benzyl methacrylate is used as aralkyl (meth)acrylate and that allyl (meth)acrylate is used as the crosslinking monomer.

## Revendications

1. Procédé de préparation de particules de poly(méth)acrylate ayant un diamètre de 1 à 15 µm,
caractérisé en ce qu'
on polymérise les monomères M selon le procédé de la polymérisation discontinue avec de 20 à 50 parties en poids de monomère M dans un milieu liquide LM, constitué de 55 à 100 % en poids d'huile minérale et avec addition de 0,1 à 5 parties en poids d'un émulsifiant polymère E et de 0,05 à 5 parties en poids d'un initiateur radicalaire.

2. Procédé selon la revendication 1,
caractérisé en ce que
l'accroissement du taux de transformation du monomère de 0 à plus de 80 % des monomères M s'effectue dans un intervalle de temps de 15 à 60 minutes.

3. Procédé selon les revendications 1 à 2,
caractérisé en ce que
les monomères M se composent des divers comonomères.

4. Procédé selon les revendications 1 à 3,
caractérisé en ce que
les monomères M se composent d'au moins 20 % de méthacrylate de méthyle.

5. Procédé selon les revendications 1 à 4,
caractérisé en ce qu'
on utilise comme comonomère M des (méth)acrylates d'aralkyle.

6. Procédé selon les revendications 1 à 5,
caractérisé en ce que
les monomères M se composent de 0,5 à 10 % en poids d'esters d'acide acrylique.

7. Procédé selon les revendications 1 à 6,
caractérisé en ce que
les monomères M se composent de 0,1 à 20 % en poids de monomères réticulants.

8. Procédé selon les revendications 5 à 7,
caractérisé en ce qu'
on utilise comme (méth)acrylate d'aralkyle le méthacrylate de benzyle et comme monomère réticulant le (méth)acrylate d'allyle.
